(19) Europäisches Patentamt / European Patent Office / Office européen des brevets

(11) **EP 3 923 109 A1**

(12) **DEMANDE DE BREVET EUROPEEN**

(43) Date de publication:
**15.12.2021 Bulletin 2021/50**

(51) Int Cl.:
***G05D 23/19*** *(2006.01)*

(21) Numéro de dépôt: **21178327.9**

(22) Date de dépôt: **08.06.2021**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **08.06.2020 FR 2005968**

(71) Demandeur: **Electricité de France**
**75008 Paris (FR)**

(72) Inventeurs:
• **GASTIGER, Frédéric**
**77210 AVON (FR)**
• **BONTEMPS, Stéphanie**
**75012 PARIS (FR)**
• **TRAILIN, Jérôme**
**77300 FONTAINEBLEAU (FR)**

(74) Mandataire: **Regimbeau**
**20, rue de Chazelles**
**75847 Paris Cedex 17 (FR)**

(54) **PROCÉDÉ DE PILOTAGE OPTIMISÉ D'UN SYSTÈME DE CHAUFFAGE**

(57) La présente invention concerne un procédé de pilotage optimisé d'un système de chauffage utilisant un planning de températures de consigne programmées, comprenant les étapes suivantes :
(a) acquisition d'un planning de consigne initial comprenant des valeurs de températures de consigne du système de chauffage et des plages horaires, chaque valeur de température de consigne étant associée à une plage horaire respective ;
(b) traitement du planning de consigne initial pour générer un planning de consigne optimisé comprenant un nombre réduit de valeurs de températures de consigne par rapport au planning de consigne initial et/ou un nombre réduit de plages horaires par rapport au planning de consigne initial ;
(c) transmission du planning optimisé au système de chauffage, pour piloter le système de chauffage.

Figure 1

**Description**

**DOMAINE DE L'INVENTION**

La présente invention concerne le domaine des systèmes de chauffage, et plus particulièrement, le domaine des systèmes de chauffage domestique pilotés.

**ETAT DE LA TECHNIQUE**

Actuellement, le chauffage représente 66% des consommations énergétiques des foyers (« Se chauffer mieux et moins cher - Les solutions pour optimiser les systèmes de chauffage et d'eau chaude, Edition Juin 2019, ADEME »). Une première solution pour qu'un foyer réduise ses consommations consiste à utiliser un thermostat qui pilote le système de chauffage pour, d'une part, réguler la température dans le foyer et, d'autre part, assurer sa programmation afin d'avoir la bonne température au bon moment et dans la bonne pièce. Seulement, beaucoup de personnes ne savent pas définir leur programmation de chauffage de façon optimale. Certains laissent leur chauffage fonctionner en mode « confort » en continu alors qu'ils disposent d'un thermostat mais ne savent pas comment l'utiliser. D'autres mettent en place des plannings trop complexes avec de nombreuses plages de programmation, bien souvent avec de faibles écarts de températures, alors qu'en général deux à six plages sont suffisantes. Il est donc important de savoir définir le planning mis en place et comment l'améliorer pour pouvoir proposer à l'utilisateur une programmation plus adaptée à ses besoins, tout en cherchant à réduire ses consommations énergétiques liées au chauffage.

Pour piloter le système de chauffage des utilisateurs particuliers, un grand nombre de fabricants proposent des thermostats programmables connectés avec des fonctionnalités différentes. Pour beaucoup de systèmes existants, la programmation est directement réalisée par l'utilisateur qui définit ses scénarios. Certains thermostats adaptent la température de consigne en tenant compte de la géolocalisation du téléphone portable de l'utilisateur ou de sa présence dans le foyer ou une pièce grâce à un détecteur de présence, voire font une anticipation de relance adaptative de la température à partir de la température extérieure et de l'isolation du bâtiment déterminée par l'algorithme du thermostat. Enfin, certains thermostats réalisent un auto-apprentissage des habitudes du foyer, soit en partant d'un premier programme prédéfini par le thermostat, soit à partir d'une première température de consigne choisie par l'utilisateur. Puis, la programmation est adaptée au fur et à mesure que l'utilisateur change la température du thermostat. Ces modèles de thermostats proposent également la fonctionnalité « Economies saisonnières » qui se déclenche si de petits ajustements de la programmation sont susceptibles de réduire la consommation d'énergie du client sans perte de confort. Dans le cas contraire, ou si la programmation ne comprend pas suffisamment de températures, la fonctionnalité ne se déclenche pas durant la saison de chauffe.

Néanmoins, quel que soit le modèle de thermostat existant, c'est à l'occupant du logement de programmer son thermostat comme il le veut et il est possible de définir autant de scénarios que souhaités, ce qui n'est pas forcément pertinent. Il est donc important de s'assurer que la programmation mise en place est appropriée dans un premier temps pour pouvoir proposer un planning plus adapté si besoin. En effet, un planning inadapté provoque une surconsommation d'énergie électrique, ce qui a un coût financier pour l'utilisateur et in fine un coût environnemental en termes de pollution et de consommation des ressources.

Dans ce contexte, il est nécessaire de fournir un procédé de pilotage d'un système de chauffage qui permette de réduire la consommation énergétique, tout en respectant les souhaits de l'utilisateur.

**EXPOSE DE L'INVENTION**

Selon un premier aspect, l'invention propose un procédé de pilotage optimisé d'un système de chauffage utilisant un planning de températures de consigne programmées, comprenant les étapes suivantes :

(a) acquisition d'un planning de consigne initial comprenant des valeurs de températures de consigne du système de chauffage et des plages horaires, chaque valeur de température de consigne étant associée à une plage horaire respective ;

(b) traitement du planning de consigne initial pour générer un planning de consigne optimisé comprenant un nombre réduit de valeurs de températures de consigne par rapport au planning de consigne initial et/ou un nombre réduit de plages horaires par rapport au planning de consigne initial ;

(c) transmission du planning optimisé au système de chauffage, pour piloter le système de chauffage.

Le procédé selon l'invention propose très avantageusement trois étapes successives dont les effets sont synergiques. En effet, l'étape (a) permet d'acquérir un planning de consigne fournissant ainsi le matériau de départ à l'exécution du procédé. L'étape (b) permet très avantageusement de traiter le planning de consigne fourni à l'étape (a) pour l'épurer de certaines consignes de températures et/ou de plages horaires aberrantes par rapport au reste du planning de consigne, pour diminuer la consommation énergétique. Ensuite, l'étape (c) permet la transmission du planning de consigne optimisé afin que celui-ci soit exécuté par le système de chauffage en lieu et place du planning de consigne initial.

## DESCRIPTION DES FIGURES

D'autres caractéristiques, buts et avantages de l'invention ressortiront de la description qui suit, qui est purement illustrative et non limitative, et qui doit être lue en regard du dessin annexé sur lequel :

La figure 1 est une représentation d'un exemple de planning de consigne initial.

La figure 2 est un schéma bloc d'un procédé conforme à un mode de réalisation de l'invention.

La figure 3 est un schéma bloc d'un procédé conforme à un mode de réalisation de l'invention comprenant une étape (0).

La figure 4 est une représentation partielle d'un planning de consigne initial construit lors de l'étape (0).

La figure 5 est un schéma bloc des différentes sous étapes de l'étape (b).

La figure 6 est un schéma d'une arborescence de répartition des binômes en groupes et sous-groupes.

La figure 7 est une représentation d'un exemple de planning de consigne optimisé généré à lors de la sous-étape (b5).

La figure 8 est une représentation d'un exemple de planning de consigne optimisé généré lors de la sous-étape (b6) et transmis lors de l'étape (c).

## DESCRIPTION DETAILLEE DE L'INVENTION

*Contexte - système de chauffage*

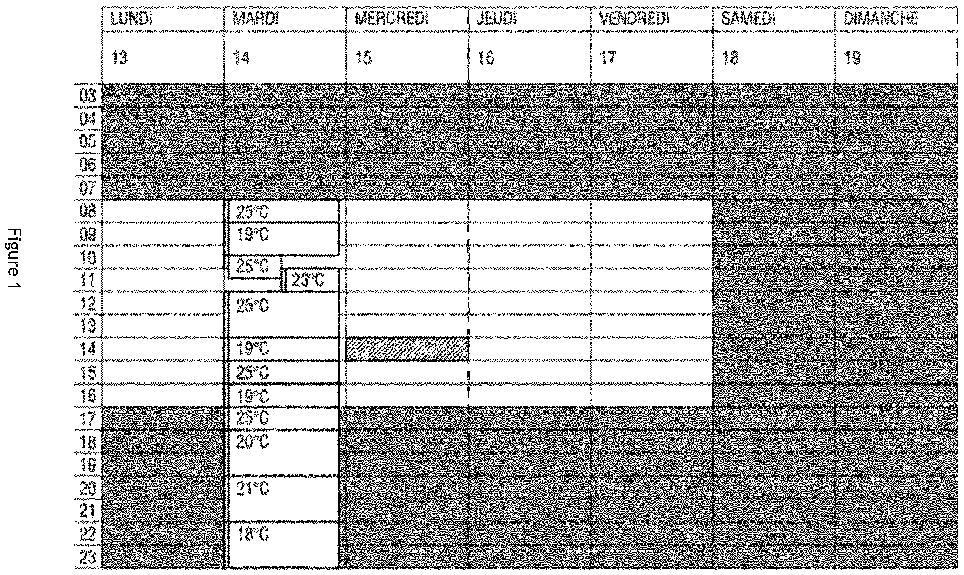

Selon un premier aspect, l'invention propose un procédé de pilotage optimisé d'un système de chauffage utilisant un planning de températures de consigne préprogrammées.
Le procédé selon l'invention s'intègre dans le contexte des systèmes de chauffage pilotés communément appelés thermostats connectés.
D'une manière générale ces systèmes de chauffage comprennent à minima un boitier de commande et un capteur de température.
Le boitier de commande est connecté aux éléments de chauffage (radiateurs, tubes caloporteurs, pompes à chaleurs, etc.).
Un ou plusieurs capteurs de température permettent de mesurer la température dans la ou les pièces chauffées, et le boîtier de commande pilote les éléments de chauffage en fonction de la température mesurée. En cela le système de chauffage se comporte comme un thermostat conventionnel. Ainsi, il permet par exemple de chauffer une pièce jusqu'à ce qu'elle atteigne une température de consigne donnée (par exemple 19°C), une fois la température de consigne atteinte, le chauffage est arrêté.
Par rapport aux thermostats conventionnels, les systèmes de chauffages pilotés apportent une gestion simple et intuitive d'un planning de consigne.
Par planning de consigne, il est entendu un emploi du temps, le plus souvent hebdomadaire (tel que représenté sur la figure 1), dans lequel un utilisateur peut définir une température de consigne pour un jour et un horaire donné.
Par gestion simple et intuitive, il est entendu que ces systèmes proposent le plus souvent une interface graphique ergonomique utilisant souvent un site internet accessible aussi bien à partir d'un ordinateur personnel que d'un terminal mobile. Comme présenté dans l'exemple de la figure 1, le plus souvent cette interface reproduit un emploi du temps hebdomadaire, sur lequel il est possible d'ajuster la température chaque jour sur une plage horaire donnée.
Ainsi, dans l'exemple proposé en figure 1, l'utilisateur a défini que le mardi, son système de chauffage maintiendra une température de 25°C entre 8h et 9h, puis une température de 19°C entre 9h et 10h30. Ensuite, de 10h30 à 11h, la température de consigne repasse à 25°C. De 11h à 12h la température est fixée à 23°C, puis de 12h à 14h, la température remonte à 25°C. Dans l'après-midi, la température de consigne oscille toutes les heures entre 19°C et 25°C. Le soir, de 18h à 20h, la température de consigne est fixée à 20°C. Puis de 20h à 22h la température de consigne est de 21°C. De 22h à 00h la température est fixée à 18°C.

On comprend bien, sur cet exemple que les réglages effectués par l'utilisateur ne sont pas optimaux.

D'une part, les variations de températures demandées sont trop importantes dans un pas temporel trop faible. En effet, l'inertie du système de chauffage et du bâtiment dans lequel celui-ci est intégré ne permettent pas de passer de 25°C à 18°C en moins d'une heure (quel que soit le système de chauffage et les qualités thermiques du bâtiment).

D'autre part, les successions de variation de températures demandées nécessitent de réguliers allumages et extinctions du système de chauffage. Or, chaque allumage nécessitera un important appel de puissance ce qui peut augmenter la consommation énergétique. Encore un fois, cette loi est valable quel que soit le système de chauffage : électrique, au gaz, au fioul, au biocarburant, etc.

A l'origine, les systèmes de chauffage pilotés ont été conçus pour faciliter le réglage de la température de consigne, de sorte à diminuer la consommation énergétique d'un foyer utilisant ce système. En effet, l'ergonomie proposée permet à n'importe quel utilisateur de simplement définir des températures de consigne. Ainsi, dans un cas idéal, l'utilisateur règle des températures de consigne adaptées aux différents moments de la journée (jour ou nuit) et à sa présence ou non dans le foyer.

Or, comme cela est présenté en figure 1, il est possible que l'utilisateur rentre des consignes aberrantes.

Dans ce contexte, l'invention propose un procédé de pilotage permettant de générer et transmettre un planning de consigne optimisé.

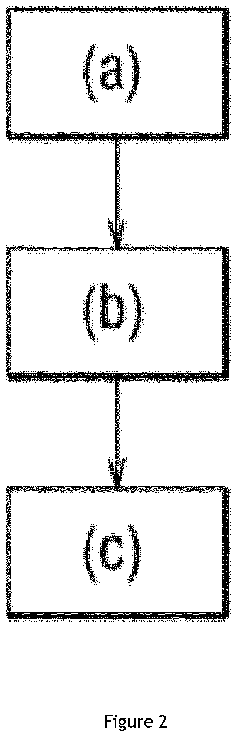

Tel que représenté sur la figure 2, le procédé selon l'invention comprend essentiellement les étapes suivantes :

(a) acquisition d'un planning de consigne initial comprenant des valeurs de températures de consigne du système de chauffage et des plages horaires, chaque valeur de température de consigne étant associée à une plage horaire respective ;

(b) traitement du planning de consigne initial pour générer un planning de consigne optimisé comprenant un nombre réduit de valeurs de températures de consigne par rapport au planning de consigne initial et/ou un nombre réduit de plages horaires par rapport au planning de consigne initial ;

(c) transmission du planning optimisé au système de chauffage, pour piloter le système de chauffage.

*Etape (a) d'acquisition d'un planning*

Comme indiqué précédemment l'étape (a) comprend l'acquisition d'un planning de consigne initial comprenant des valeurs de températures de consigne du système de chauffage et des plages horaires, chaque valeur de température de consigne étant associée à une plage horaire respective.

Selon un premier mode de réalisation, le planning de consigne initial (tel que représenté sur la figure 1) est généré par le système de chauffage.

En d'autres termes, selon ce mode de réalisation, le planning de consigne initial est accessible et connu. Dans cette configuration, le système de chauffage peut exécuter lui-même le procédé selon l'invention. Ainsi, le système de chauffage peut utiliser lui-même le planning de consigne initial. Dans une autre configuration, si le procédé est exécuté par un dispositif extérieur au système de chauffage (i.e. si le dispositif exécutant le procédé n'a pas directement accès au planning de consigne initial), il est possible qu'un utilisateur fournisse le planning de consigne initial.

Dans ce cas, le planning de consigne initial peut être fourni sous la forme de données informatiques récupérées auprès du système de chauffage et transférées au dispositif exécutant le procédé. Ou alors, l'utilisateur peut programmer lui-même le dispositif avec le contenu du planning de consigne initial via une interface graphique dédiée du dispositif.

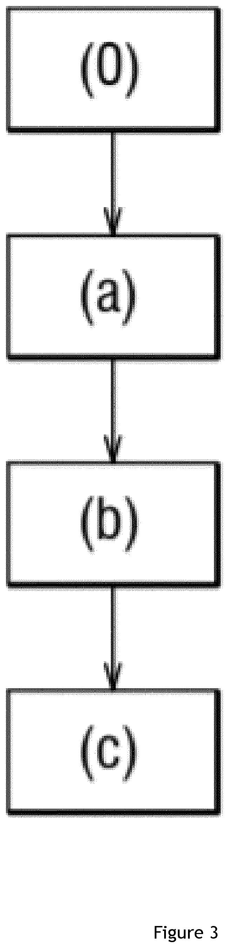

Selon un autre mode de réalisation, en référence à la figure 3 le dispositif exécutant le procédé selon l'invention n'a pas accès au planning de consigne initial.

Selon ce mode de réalisation, le procédé comprend une étape (0) préalable à l'étape (a), de construction du planning de consigne initial.

La construction du planning de consigne initial est réalisée en mesurant des valeurs d'une température ambiante avec un pas temporel défini.

Préférentiellement, la mesure est réalisée avec un pas temporel de quinze minutes.

Ensuite, la reconstruction du planning de consigne initial est réalisée en supprimant les faibles variations de température et en ne conservant que les changements de température correspondant à un palier de température de consigne.

En pratique, la détection d'un palier est effectuée en repérant une croissance ou une décroissance continue de la température pendant un temps donné, pour amener la température jusqu'à un maximum ou un minimum.

Par faibles variations, il est entendu des variations de plus ou moins deux degrés (préférentiellement de plus ou moins un degré).

En d'autres termes, les températures acquises sont réduites à une succession de paliers. Pour chaque palier, une seule valeur de température est conservée.

Selon une disposition préférentielle, on ne conserve qu'une température extrême (minimum ou maximum) de chaque palier.

Selon d'autres modes de réalisations, la température conservée peut être la moyennes ou la médiane des températures acquises pour chaque palier.

Les températures conservées pour chaque palier sont considérées comme des températures de consigne.

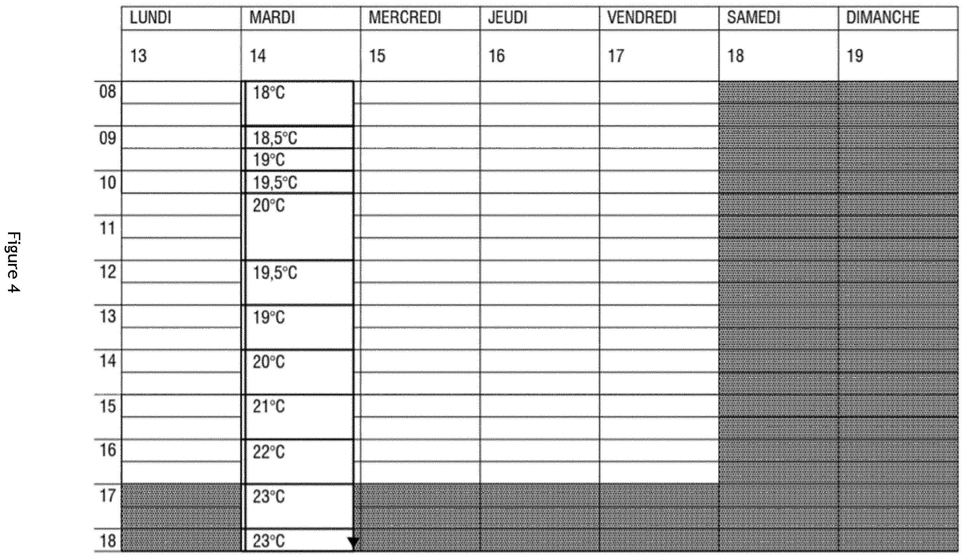

Un exemple de planning de consigne initial construit selon l'étape (0) est présenté en figure 4. On voit ainsi par exemple, qu'il est estimé qu'entre 10h à 12h la température de consigne est de 20°C.

L'étape (0) présente l'avantage d'avoir un planning de consigne initial se fiant uniquement à la température ambiante. Ainsi, si l'utilisateur a donné des consignes aberrantes de variation rapide et importante de température (telle que 25°C de 8h15 à 8h30, puis 19°C de 8h30 à 8h45), celles-ci sont d'ores et déjà lissées et n'apparaissent pas dans le planning de consigne construit lors de l'étape (0). En effet, comme expliqué précédemment, l'inertie du système de chauffage et de la pièce chauffée font que sur de petits écarts temporels il est impossible d'avoir de grandes variations de température. La température ambiante sera une température comprise entre les températures maximale et minimale demandées (ici 25°C et 19°C). Il est précisé que la valeur effective de la température ambiante dépend de la puissance du système de chauffage, du volume chauffé, de l'isolation et de l'exposition au soleil de la pièce chauffée. Cette valeur ne peut donc pas être simplement réduite à une moyenne ou une médiane.

Ainsi, l'acquisition de la température ambiante et la construction du planning de consigne initial lors de l'étape (0) sont des éléments techniques particulièrement avantageux. En conséquence, on peut envisager un mode de réalisation dans lequel le procédé exécute l'étape (0) même si le planning de consigne initial est acquis par ailleurs.

*Etape (b) de traitement du planning - principes généraux*

Après exécution de l'étape (a), le procédé comprend l'exécution de l'étape (b) comprenant le traitement du planning de consigne initial pour générer un planning de consigne optimisé comprenant un nombre réduit de valeurs de températures de consigne par rapport au planning de consigne initial et un nombre réduit de plages horaires par rapport au planning de consigne initial.

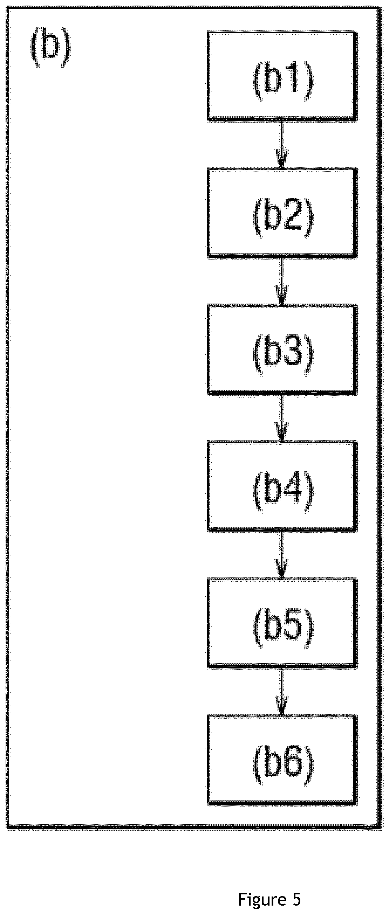

Pour réaliser ce traitement, l'étape (b) peut comprendre plusieurs sous étapes dont l'enchainement est schématisé sur la figure 5.

*Etape (b) de traitement du planning - sous-étape (b1)*

Selon le mode de réalisation ici présenté, l'étape (b) peut comprendre une première sous-étape (b1) de listage de binômes, chaque binôme comprenant une plage horaire et une valeur de température de consigne du planning de consigne initial, la valeur de température de consigne étant associée à la plage horaire dans le planning de consigne initial.

En d'autres termes, on estime que chaque consigne du planning de consigne initial est un binôme [température - plage horaire]. Par exemple, sur la figure 1 on a notamment un binôme : 21°C de 20h à 22h.

Tel que cela sera détaillé ci-après, le travail sur des binômes permet de corréler la température avec une plage horaire, pour traiter un binôme (un lot, un ensemble) de données et non plus deux données distinctes. Ainsi une même température de consigne ne sera pas traitée pareil en fonction de la durée de sa plage horaire ou de son positionnement dans la journée. Il s'agit là d'une disposition technique particulièrement avantageuse, le procédé prend en compte une globalité de paramètres corrélés pour générer le planning de consigne optimisé, contrairement à des procédés qui pourraient se contenter de fixer une température maximale ou minimale ou des durées maximales ou minimale. Ici, chaque binôme [température - plage horaire] est traité selon les trois paramètres corrélés que sont la température, la durée et le positionnement dans la journée.

*Etape (b) de traitement du planning - sous-étape (b2)*

Après avoir listé les binômes lors de la sous-étape (b1), l'étape (b) comprend une sous-étape (b2) de classification des binômes en au moins deux groupes appelés « nuit » et « jour ».

Le groupe nuit est attribué à des binômes dont la plage horaire est comprise dans une plage horaire de nuit. A titre d'exemple, la plage de nuit peut être comprise entre 18h et 9h, préférentiellement la plage de nuit peut être comprise entre 0h et 4h.

Le groupe jour est attribué à des binômes dont la plage horaire est comprise dans une plage horaire de jour. A titre d'exemple, la plage horaire de jour est comprise entre 5H et 23H, préférentiellement la plage de jour peut être comprise entre 10h et 16h.

Il est entendu que les plages horaires données précédemment sont larges et que l'utilisateur ou un opérateur paramétrant le procédé selon l'invention choisiront des plages horaires adaptées et consécutives (qui ne se recoupent pas).

Le paramétrage de la plage de nuit et de la plage de jour peut être réalisé en fonction de nombreux paramètres tels que la localisation géographique (dont dépendent directement la durée d'ensoleillement quotidienne et la température extérieure), la saison (heure d'été ou heure d'hiver), et de tout autre paramètre pertinent.

On comprendra néanmoins, que de base, le groupe jour est attribué pour des plages horaires comprises (ou autour) d'une période d'ensoleillement quotidienne et le groupe nuit est attribué pour des plages horaires comprises (ou autour) d'une période nocturne d'absence d'ensoleillement.

*Etape (b) de traitement du planning - sous-étape (b3)*

Après la répartition en groupe jour et nuit de la sous-étape (b2), l'étape (b) comprend une sous-étape (b3) de répartition des binômes du groupe jour en au moins deux sous-groupes appelés « confort » et « absence ».

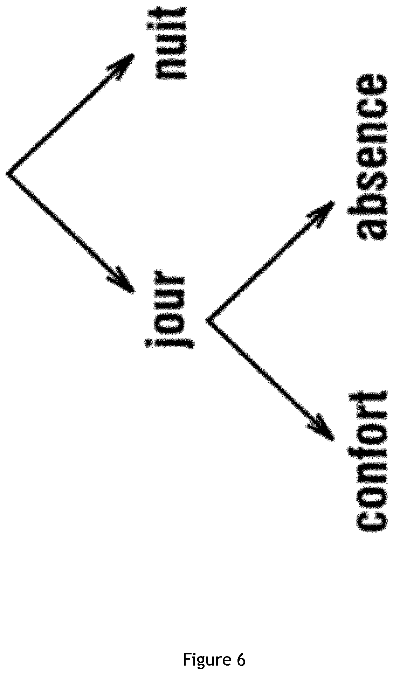

Cette répartition est illustrée sur la figure 6. Tel que schématisé sur la figure 6, on comprend que le procédé comprend une première répartition dichotomique lors de la sous étape (b2) puis une deuxième répartition dichotomique lors de la sous-étape (b3). A noter que la sous-étape (b3) ne concerne que les binômes du groupe jour.

La répartition de la sous-étape (b3) est effectuée en déterminant pour chaque binôme si la valeur de température de consigne du binôme est plus proche d'une valeur de température déterminée comme température de confort ou d'une température déterminée comme température d'absence.

Cette répartition est réalisée en observant sur l'ensemble des binômes, ceux pour lesquels les températures sont à la hausse. En d'autres termes en suivant la progression temporelle, on observe une augmentation de la température (c'est-à-dire que les températures situées temporellement avant l'augmentation sont plus faibles).

Selon une première possibilité, suite à l'augmentation (la hausse) il n'y a qu'une seule valeur de température. Cette température est déterminée comme température de confort.

Selon une deuxième possibilité, il y a plusieurs valeurs de températures après la hausse. La température la plus fréquente est alors déterminée. Préférentiellement, cette température est arrondie à 1 degrés et encore plus préférentiellement à 0,5 degrés.

Après avoir ainsi déterminé la température de confort, pour chaque binôme on regarde si la température de consigne du binôme est supérieure à une valeur calculée selon [math. 1]

$$T_{cons\,confort}\,\min\left[0{,}5, \frac{T_{cons\,confort} - \max(T_{cons\,abs}, T_{cons\,nuit})}{2}\right].$$

Avec, Tcons confort la température de consigne de confort, T cons absence la température de consigne d'absence et Tcons nuit la température de consigne de nuit.

Pour chaque binôme, si la température de consigne est supérieure à la valeur calculée alors ce binôme est attribué au sous-groupe confort, sinon il est attribué au sous-groupe absence.

*Etape (b) de traitement du planning - sous-étape (b4)*

Suite à la sous-étape (b3), l'étape (b) comprend une sous-étape (b4) de lissage des valeurs de températures de consigne des binômes classés dans le groupe nuit et dans chaque sous-groupe confort ou absence.

Le lissage est effectué en conservant uniquement une valeur de température de consigne la plus fréquente respectivement dans le groupe nuit et dans chaque sous-groupe confort et absence.

Ainsi, d'une manière avantageuse, le lissage consiste surtout - pour chaque groupe ou sous-groupe - à supprimer les valeurs de températures éparses, pour ne conserver que la température la plus fréquemment demandée.

Selon d'autres modes de réalisation il serait envisageable de ne conserver qu'une température moyenne ou médiane pour chaque groupe ou sous-groupe.

*Etape (b) de traitement du planning - sous-étape (b5)*

Ensuite, l'étape (b) comprend une sous-étape (b5) de génération du planning de consigne optimisé, le planning de consigne optimisé comprend au moins deux plages horaires obtenues en combinant respectivement des plages horaires du groupe nuit, des plages horaires du sous-groupe confort et des plages horaires du sous-groupe absence, et au moins deux températures de consigne égales aux températures conservées lors de la sous-étape (b4).

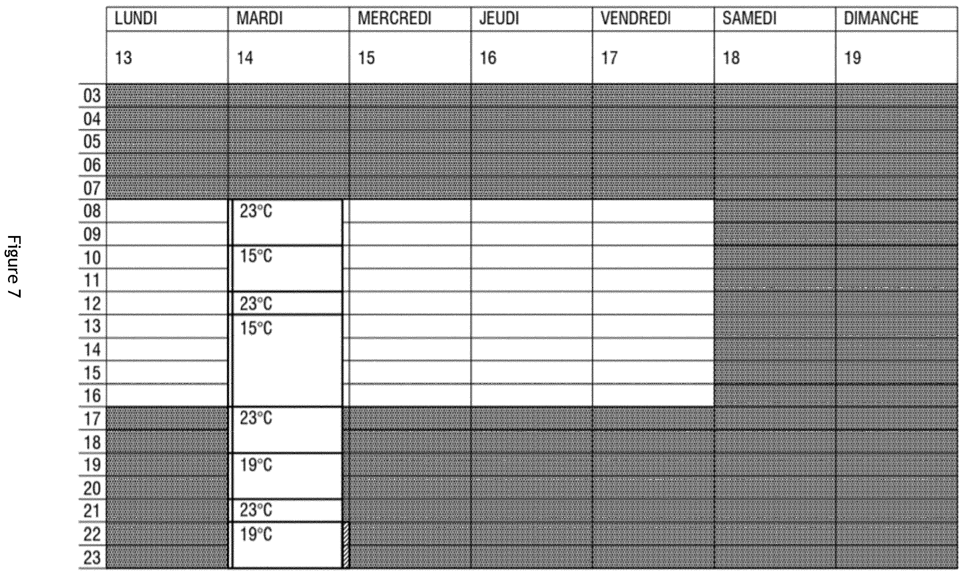

Un exemple de planning de consigne optimisé généré lors de la sous étape (b5) est présenté en figure 7, on remarque aisément que ce planning permet de ne conserver que trois valeurs de températures de consigne.

Bien entendu, il est possible de conserver d'autres températures de consigne en créant d'autres sous-groupes de répartition dans la sous-étape (b4).

A ce stade du procédé, le planning de consigne optimisé a été épuré des consignes aberrantes de températures présentes dans le planning de consigne initial, pour ne conserver qu'un nombre réduit de températures de consigne.

*Etape (b) de traitement du planning - sous-étape (b6)*

Néanmoins, comme on peut le remarquer sur la figure 7, le planning peut encore comporter des plages horaires trop courtes pour être significative.

En effet, comme expliqué précédemment, en fonction de l'efficacité thermique du bâtiment et de la puissance du système de chauffage, une consigne sur une plage de moins 1h30 (préférentiellement 1h) ne pourra pas être réellement mise en pratique (ou alors au prix d'une importante consommation énergétique).

Bien sûr, la valeur d'1h30 n'est qu'un exemple qui pourra être adapté aux réalités de chaque système de chauffage.

Ainsi, la sous-étape (b6) comprend la suppression des plages horaires présentant une durée inférieure à une durée prédéterminée, préférentiellement la durée prédéterminée étant d'au moins 1H30.

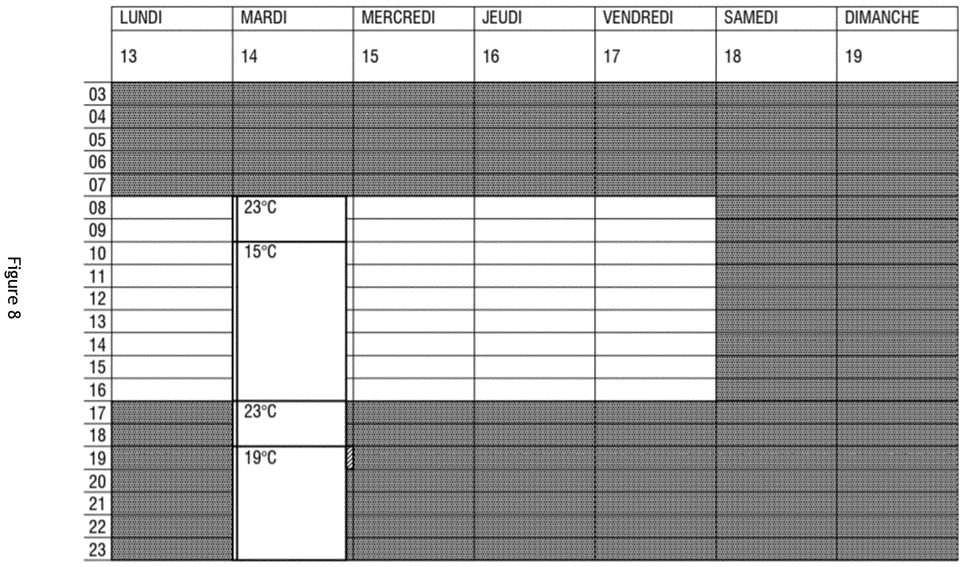

Un exemple de planning de consigne optimisé ainsi nettoyé des plages horaires trop courtes est représenté sur la figure 8.

Comme on peut l'observer sur l'exemple de la figure 8, le planning de consigne optimisé ainsi généré ne contient plus que de longues plages horaires (i.e. sans courtes interruptions de moins d'1h30).

Ainsi, en partant d'un planning de consigne initial tel que représenté sur la figure 1, le procédé selon l'invention permet, à l'issue de la sous-étape (b6) d'avoir de préférence un planning de consigne optimisé ne comprenant plus que trois températures de consigne, réparties sur des plages horaires cohérentes suffisamment longues pour permettre au système de chauffage d'appliquer la consigne - lorsqu'il s'agit d'une montée en température - ou pour faire de réelles économies - lorsqu'il s'agit d'une descente en température, avec de faibles amplitudes thermiques.

Tout en préservant le confort et les souhaits en température de l'utilisateur, le procédé selon l'invention permet d'optimiser le planning de consigne pour diminuer le nombre de consignes et donc diminuer la consommation énergétique du système de chauffage (et par conséquent de l'utilisateur). Il s'agit là d'une disposition technique particulièrement avantageuse. En effet, le procédé selon l'invention n'impose pas de nouvelles températures n'ayant rien à voir avec les souhaits et besoins de l'utilisateur, mais va optimiser le planning de consigne en respectant les choix faits par l'utilisateur.

Il est précisé que les choix de l'utilisateur sont tout autant respectés que le procédé parte du planning de consigne initial ou le reconstruise lors de l'étape (0). En effet, dans le cadre de la reconstruction de l'étape (0), le planning de consigne initial est généré à partir de la température ambiante. Or, la température ambiante résulte directement des choix de réglage de l'utilisateur.

En d'autres termes, si un utilisateur frileux estime qu'il a besoin de chauffer son logement à 26°C, le procédé selon l'invention ne lui impose pas de descendre à 19°C. Les 26°C demandés seront conservés mais seront appliqués plus efficacement pour réduire la consommation énergétique et donc le coût financier et l'impact environnemental.

*Etape (c) de transmission du planning et étapes ultérieures*

Une fois le planning de consigne optimisé généré lors de l'étape (b), celui-ci est transmis durant l'étape (c).

Par transmission, il est entendu que le planning de consigne optimisé est transmis au système de chauffage pour être ensuite appliqué en lieu et place du planning de consigne initial (i.e. pour piloter le système de chauffage), lors d'une étape ultérieure à l'étape (c).

Selon un mode de réalisation alternatif, le planning de consigne optimisé peut être transmis à l'utilisateur pour qu'il reprogramme lui-même le système de chauffage avec le planning de consigne optimisé, lors d'une étape ultérieure à l'étape (c).

Ainsi, quel que soit le vecteur de transmission, la transmission a pour objectif la reprogrammation (le pilotage) du système de chauffage et donc la modification physique et concrète des paramètres de chauffe, et in fine des variations de température dans le logement et de la consommation énergétique du système de chauffage.

*Unité de traitement*

Selon un autre aspect, l'invention concerne une unité de traitement programmée pour mettre en œuvre le procédé de pilotage optimisé d'un système de chauffage selon l'invention.

Typiquement, l'unité de traitement peut être un dispositif électronique positionné dans le logement, connecté à un réseau de communication de type internet et pouvant aussi être connecté directement au système de chauffage.

L'unité de traitement peut aussi directement être intégrée au système de chauffage.

L'unité de traitement peut notamment comprendre des moyens de mesure de la température ambiante (i.e. un ou plusieurs capteur(s) de température) pour pouvoir exécuter l'étape (0) du procédé.

*Produit programme d'ordinateur*

Selon un autre aspect, l'invention concerne un produit programme d'ordinateur comprenant des instructions de code pour l'exécution du procédé selon l'invention.

*Moyens de stockage*

Selon un autre aspect, l'invention concerne des moyens de stockage lisibles par un équipement informatique sur lesquels un produit programme d'ordinateur comprend des instructions de code pour l'exécution du procédé de pilotage optimisé d'un système de chauffage selon l'invention.

**Revendications**

1. Procédé de pilotage optimisé d'un système de chauffage utilisant un planning de températures de consigne programmées, comprenant les étapes suivantes :

   (a) acquisition d'un planning de consigne initial comprenant des valeurs de températures de consigne du système de chauffage et des plages horaires, chaque valeur de température de consigne étant associée à une plage horaire respective ;
   (b) traitement du planning de consigne initial pour générer un planning de consigne optimisé comprenant un nombre réduit de valeurs de températures de consigne par rapport au planning de consigne initial et/ou un nombre réduit de plages horaires par rapport au planning de consigne initial ;
   (c) transmission du planning optimisé au système de chauffage, pour piloter le système de chauffage ;
   l'étape (b) comprenant une sous-étape (b1) de listage de binômes, chaque binôme comprenant une plage horaire et une valeur de température de consigne du planning de consigne initial, la valeur de température de consigne étant associée à la plage horaire dans le planning de consigne initial, et comprenant une sous-étape (b2) de classification des binômes en au moins deux groupes appelés nuit et jour,
   le groupe nuit étant attribué à des binômes dont la plage horaire est comprise dans une plage horaire de nuit,
   le groupe jour étant attribué à des binômes dont la plage horaire est comprise dans une plage horaire de jour.

2. Procédé selon la revendication 1, dans lequel la plage horaire de jour est comprise entre 5H et 23H.

3. Procédé selon la revendication 1, dans lequel la plage horaire de nuit est comprise entre 18H et 9H.

4. Procédé selon l'une quelconque des revendications 1 à 3, dans lequel l'étape (b) comprend une sous-étape (b3) de répartition des binômes du groupe jour en au moins deux sous-groupes appelés confort et absence, la répartition étant effectuée en déterminant pour chaque binôme si la valeur de température de consigne du binôme est plus proche d'une valeur de température déterminée comme température de confort ou d'une température déterminée comme température d'absence.

5. procédé selon la revendication 4, dans lequel la température déterminée comme température de confort est la température maximale relevée.

6. Procédé selon la revendication 4, dans lequel la température déterminée comme température d'absence est une température la plus fréquente parmi un ensemble de température relevé après une augmentation de température.

7. Procédé selon l'une quelconque des revendications 4 à 6, dans lequel la répartition de chaque binôme dans le sous-groupe nuit ou dans le sous-groupe confort est réalisée en comparant la température de consigne avec une valeur calculée selon :

$$T_{cons\,confort}\ \min\left[0{,}5, \frac{T_{cons\,confort} - max(T_{cons\,abs}, T_{cons\,nuit})}{2}\right]$$

si la température de consigne est supérieure à la valeur calculée alors le binôme est attribué au sous-groupe confort, sinon le binôme est attribué au sous-groupe absence.

8. Procédé selon l'une quelconque des revendications 4 à 7, dans lequel l'étape (b) comprend une sous-étape (b4) de lissage des valeurs de températures de consigne des binômes classés dans le groupe nuit et dans chaque sous-groupe confort ou absence, le lissage étant effectué en conservant uniquement une valeur de température de consigne la plus fréquente respectivement dans le groupe nuit et dans chaque sous-groupe confort et absence.

9. Procédé selon la revendication 8, dans lequel l'étape (b) comprend une sous-étape (b5) de génération du planning de consigne optimisé, le planning de consigne optimisé comprenant au moins trois plages horaires obtenues en combinant respectivement des plages horaires du groupe nuit, des plages horaires du sous-groupe confort et des plages horaires du sous-groupe absence, et au moins trois températures de consigne égales aux températures conservées lors de la sous-étape (b4).

10. Procédé selon la revendication 9, dans lequel l'étape (b) comprend une sous-étape (b6) de suppression des plages horaires présentant une durée inférieure à une durée prédéterminée, préférentiellement la durée prédéterminée étant d'au moins 1H30.

11. Procédé selon l'une quelconque des revendications 1 à 9, dans lequel le planning de consigne initial a été généré par le système de chauffage.

12. Procédé selon l'une quelconque des revendications 1 à 9, comprenant une étape préalable à l'étape (a), de construction du planning de consigne initial en mesurant des valeurs d'une température ambiante avec un pas temporel défini, chaque valeur de la température ambiante mesurée étant considérée comme une valeur de température de consigne, préférentiellement le pas temporel défini étant de 15 min.

13. Procédé selon l'une quelconque des revendications 1 à 12, comprenant une étape ultérieure à l'étape (c), d'application du planning optimisé comme planning de consigne par le système de chauffage.

14. Procédé selon l'une quelconque des revendications 1 à 13, comprenant une étape ultérieure à l'étape (c), de proposition du planning optimisé à un utilisateur pour que l'utilisateur programme lui-même le système de chauffage avec le planning optimisé.

15. Unité de traitement programmée pour mettre en œuvre le procédé de pilotage optimisé d'un système de chauffage selon l'une quelconque des revendications 1 à 14.

16. Produit programme d'ordinateur comprenant des instructions de code pour l'exécution du procédé selon l'une quelconque des revendications 1 à 14 de pilotage optimisé d'un système de chauffage, lorsque ledit programme est exécuté sur un ordinateur.

17. Moyens de stockage lisibles par un équipement informatique sur lesquels un produit programme d'ordinateur comprend des instructions de code pour l'exécution du procédé de pilotage optimisé d'un système de chauffage selon l'une des revendications 1 à 14.

Figure 1

Figure 2

Figure 3

Figure 4

Figure 5

Figure 6

Figure 7

Figure 8

Europäisches
Patentamt

European
Patent Office

Office européen
des brevets

# RAPPORT DE RECHERCHE EUROPEENNE

Numéro de la demande

EP 21 17 8327

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | EP 3 106 958 A1 (SCHNEIDER ELECTRIC USA INC [US]) 21 décembre 2016 (2016-12-21) | 1-3,5-7, 11-17 | INV. G05D23/19 |
| Y | * figure 1 * | 4,8,9 | |
| X | US 2013/099011 A1 (MATSUOKA YOKY [US] ET AL) 25 avril 2013 (2013-04-25) | 1-3,5-7, 10,12-17 | |
| Y | * alinéa [0052] - alinéa [0053]; figures 10B,C * | 4,8,9 | |
| Y | US 2019/003736 A1 (MATSUOKA YOKY [US] ET AL) 3 janvier 2019 (2019-01-03) * alinéa [0163] * | 4,8,9 | |

| DOMAINES TECHNIQUES RECHERCHES (IPC) |
|---|
| G05D |

Le présent rapport a été établi pour toutes les revendications

| Lieu de la recherche | Date d'achèvement de la recherche | Examinateur |
|---|---|---|
| Munich | 25 juin 2021 | Alesandrini, Bruno |

CATEGORIE DES DOCUMENTS CITES

X : particulièrement pertinent à lui seul
Y : particulièrement pertinent en combinaison avec un
  autre document de la même catégorie
A : arrière-plan technologique
O : divulgation non-écrite
P : document intercalaire

T : théorie ou principe à la base de l'invention
E : document de brevet antérieur, mais publié à la
  date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 21 17 8327

25-06-2021

| Document brevet cité au rapport de recherche | | | Date de publication | Membre(s) de la famille de brevet(s) | | | Date de publication |
|---|---|---|---|---|---|---|---|
| EP | 3106958 | A1 | 21-12-2016 | EP | 3104248 | A1 | 14-12-2016 |
| | | | | EP | 3104249 | A1 | 14-12-2016 |
| | | | | EP | 3106958 | A1 | 21-12-2016 |
| | | | | US | 2016223214 | A1 | 04-08-2016 |
| | | | | US | 2016223216 | A1 | 04-08-2016 |
| | | | | US | 2017074534 | A1 | 16-03-2017 |
| US | 2013099011 | A1 | 25-04-2013 | CA | 2852944 | A1 | 25-04-2013 |
| | | | | CN | 103890676 | A | 25-06-2014 |
| | | | | CN | 106440187 | A | 22-02-2017 |
| | | | | EP | 2769279 | A1 | 27-08-2014 |
| | | | | EP | 3486743 | A2 | 22-05-2019 |
| | | | | JP | 6457268 | B2 | 23-01-2019 |
| | | | | JP | 2015502512 | A | 22-01-2015 |
| | | | | US | 2013099011 | A1 | 25-04-2013 |
| | | | | US | 2016169547 | A1 | 16-06-2016 |
| | | | | WO | 2013059671 | A1 | 25-04-2013 |
| US | 2019003736 | A1 | 03-01-2019 | CA | 2853045 | A1 | 25-04-2013 |
| | | | | CN | 103890679 | A | 25-06-2014 |
| | | | | CN | 106444471 | A | 22-02-2017 |
| | | | | EP | 2769280 | A1 | 27-08-2014 |
| | | | | JP | 6121431 | B2 | 26-04-2017 |
| | | | | JP | 2014531086 | A | 20-11-2014 |
| | | | | US | 2013103622 | A1 | 25-04-2013 |
| | | | | US | 2014195012 | A1 | 10-07-2014 |
| | | | | US | 2015241079 | A1 | 27-08-2015 |
| | | | | US | 2019003736 | A1 | 03-01-2019 |
| | | | | WO | 2013058967 | A1 | 25-04-2013 |

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- Se chauffer mieux et moins cher - Les solutions pour optimiser les systèmes de chauffage et d'eau chaude. ADEME, 2019